# EUROPEAN PATENT APPLICATION

(11) **EP 4 545 508 A1**
(43) Date of publication of application: **30.04.2025**
(21) Application number: 23208047.3
(22) Date of filing: 06.11.2023
(51) Int. Cl.: C05F 3/00, A01N 25/02, C02F 11/04, C05F 5/00, C05F 9/04, C05F 17/40, C05F 17/70, C05G 5/20, C05F 7/00

(54) **PROCEDURE FOR RECOVERING ORGANIC WASTE FROM LANDFILLS AND/OR ORGANIC FRACTION RECYCLING PLANTS**

(30) Priority: 27.10.2023 PT 2023119008
(71) Applicant: S.A.A. - Soluções Ambientais E Agrícolas, Lda, 1050-187 Lisboa (PT)
(72) Inventor: ROMERO BATALLAN, Carlos Alberto, MAJADAHONDA (ES)
(74) Representative: Moniz Pereira, Manuel

(57) **Abstract**

The present invention relates to a procedure for recovering organic waste from landfills and/or organic fraction recycling units. The product obtained is a liquid fertilizer for the development of crops or enrichment of the soil of a plantation that has been valorised by means of the circular economy.

## Description

### Scope of the invention

The present invention relates to a procedure for recovering organic waste from landfills and/or organic fraction recycling units. The product obtained is a liquid fertilizer for vegetables that has been recovered through a circular economy procedure.

### Background of the invention

It is very important to properly recycle organic waste with the goal of reducing its environmental impact. The most important thing is to reduce or maximize the environmental impact of recovering the fractions obtained from recycling organic materials.

It is now common for the liquid fractions obtained from landfills and/or organic fraction recycling plants, provided they meet certain parameters, to be discharged into the public grid. Obtaining the discharge values is not always easy and can increase the cost of installations due to the purification of the organic fractions.

For this reason, it is necessary to develop suitable procedures to valorise liquid fractions, such as the one described in Patent EP 38445498, where struvite compounds are obtained from the liquid fraction of municipal solid waste.

### Description of the invention

The present invention relates to a procedure for recovering organic waste from landfills and/or organic fraction recycling units, specifically for recovering the liquid fractions thereof.

Therefore, the present invention relates to a procedure for recovering a liquid fraction of organic waste from a landfill or recycling plant to obtain a liquid fertilizer comprising the following steps a), b) and c):
a) optionally separate the possible solids present in the liquid fraction or in the case of starting from a solid fraction separate the liquid part of that fraction to obtain a liquid fraction;
b) subject the liquid fraction to anaerobic or aerobic fermentation;
c) monitor the pH until it is greater than 7 and until the chemical oxygen demand (COD) is between 500 mg O₂/l and 1000 mg O₂/l.

### Definitions and terms

In this invention, including in the preceding recitals, the following terms have the meaning described below, unless their context unequivocally indicates otherwise:
- "*Organic waste*" refers to all waste that is susceptible to degradation by aerobic or anaerobic fermentation due to the action of the microbiota present in the waste itself and/or the seeding of microorganisms.
- "*Fertilizer*" is the substance with which the soil is fertilized or applied to the plant, crop or seed, so the terms fertilizer and fertilizer are equivalent.
- "*Liquid fraction from landfills, also known as leachate*", is understood as the liquids that form in landfills as a result of the decomposition processes of organic matter and liquids from rainwater that seeps between the landfill material.
- "*The liquid fraction from landfills*" shall be understood as any liquid that penetrates the deposited waste and is emitted or contained in a controlled deposit.
- "*Liquid fraction from a recycling plant*" can be liquid fractions generated in lagoons or liquid fractions from any waste treatment.

The aim of step b) is to reduce the chemical oxygen demand (COD) to values that are suitable for subsequent use as a liquid fertilizer, and to increase the pH of the fermented liquid fraction to a pH above 7. The pH increases as the content of organic acids, which are food for the microorganisms, decreases.

In stage b) you can opt for anaerobic or aerobic fermentation. Aerobic treatments consist of utilizing the microbiota present in the waste itself and/or seeding microorganisms in the presence of oxygen and agitation to ferment the organic compounds present in the liquid fraction. On the other hand, the anaerobic process has the same principle, although the microbiota/microorganisms are in conditions characterized by a lack of oxygen.

A second aspect of the invention is the liquid fertilizer obtained by the process of the invention with a pH greater than 7 and a COD of between 500 mg O₂/l and 1000 mg O₂/l.

Another aspect of the invention is the use of the liquid fertilizer obtained by the process of the invention in the development of crops or enrichment of the soil of a plantation.

A final aspect is the use of a liquid fraction of organic waste from a landfill and/or an organic fraction recycling plant to obtain a liquid fertilizer.

### Brief description of the designs

**Figure 1** shows a plant irrigated with the liquid fertilizer obtained with the process of the invention.
**Figure 2** shows some shoots treated with the fertilizer of the invention.

### Detailed description of the invention

As already mentioned, the present invention relates to a procedure for recovering a liquid fraction of organic waste from a landfill and/or an organic fraction recycling unit to obtain a liquid fertilizer comprising the following steps:
a) optionally separate the possible solids present in the liquid fraction or in the case of starting from a solid fraction separate the liquid part of that fraction to obtain a liquid fraction;
b) subject the liquid fraction to anaerobic or aerobic fermentation;
c) monitor the pH until it is greater than 7 and until the chemical oxygen demand (COD) is between 500 mg O₂/l and 1000 mg O₂/l.

Preferably the liquid fraction of organic waste from a municipal solid waste recycling plant.

Preferably, separation step a) is carried out using centrifugation and/or decantation.

Before step b), the liquid fraction from the landfill and/or an organic fraction recycling unit is mixed with a liquid that provides nutrients selected from: slurry, non-faecal effluents, liquid effluents from agri-food industries and/or liquid effluents from forestry.

Preferably in the case of step b) when fermentation is anaerobic, methane is recovered as a by-product.

If the liquid fraction of organic waste from a landfill and/or an organic fraction recycling plant may contain heavy metals, a heavy metal analysis step (d) will be carried out after step (b) .

Therefore, the procedure preferably includes a step d) for analysing heavy metals selected from among: Cd, Cr (VI), Hg, Ni, Pb and As, after step b), where steps c) and d) can be carried out in any order.

The concentrations of these metals in the final product may not exceed the following values: cadmium (Cd): 1.5 mg/kg dry matter, hexavalent chromium (Cr VI): 2 mg/kg dry matter, mercury (Hg): 1 mg/kg dry matter, nickel (Ni): 50 mg/kg dry matter, lead (Pb): 120 mg/kg dry matter, inorganic arsenic (As): 40 mg/kg dry matter.

Micronutrients selected from N, P and K are preferably added to the liquid fertilizer obtained in step e). Therefore, the process preferably comprises a step e) of adding N and/or P and/or K.

Preferably, step b) is carried out at a temperature between 32 °C and 37 °C.

Preferably, the fermentation is anaerobic; more preferably stage b) is brought to a temperature of between 32 °C and 37 °C and the energy needed to maintain this temperature is obtained from the methane obtained in this stage b) of the anaerobic fermentation.

Preferably, the liquid fertilizer obtained by the process of the invention has a pH between 7 and 9 and a COD between 500 mg O₂/l and 1000 mg O₂/l.

### Examples

### No. 1 Liquid fertilizer of the invention used for plant growth

The liquid fertilizer was obtained following the procedure of the invention from a liquid fraction of the slurry pit of an urban solid waste recycling plant.

First, the liquid fertilizer used in this example is analysed. The fermentation was anaerobic.

**Table 1. Liquid fertilizer analysis nutrient content**

| conteúdo de nutrientes | |
|---|---|
| pH | 8,50 |
| NT (mg/l) | 350 |
| TOC (mg/l) | 450 |
| C/N | 1,28 |
| P (mg/l) | 10,12 |
| K (mg/l) | 740,01 |

| | |
|---|---|
| NT: total nitrogen; TOC (Total Organic Carbon) | |

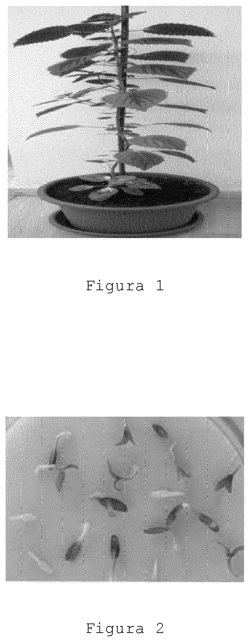

The fertilizer obtained was used to grow a plant. The growth of the plant is shown in Figure 1.

### No. 2 Germination power

The same liquid fertilizer was used as in example 1.

To determine the possible application of the liquid fertilizer of the invention, a study was carried out on its germination power using grass seeds. Grass seeds provide a rapid response in germination tests and are also highly sensitive to low concentrations of salts and phytotoxic substances. Three different dilutions (1/10, 1/50 and 1/100) were tested for each sample in order to determine the effect of salt concentration. Figure 2 shows the results of the example.

It was concluded that the liquid fertilizer of the invention has greater germination power than commercial liquid fertilizers.

**Table 2. Germination index**

| Sample | Liquid fertilizer of the invention | Commercial liquid fertilizer |
|---|---|---|
| Control | 100,0 | 100,7 |
| Dilution 1/10 | 128,3 | |
| Dilution 1/50 | 120,8 | 42,0 |
| Dilution 1/100 | 121,2 | 72,1 |

## Claims

1. Procedure for recovering a liquid fraction of organic waste from a landfill site and/or an organic fraction recycling plant to obtain a liquid fertilizer that includes the steps of:
a) optionally separate the possible solids present in the liquid fraction or, in the case of starting from a solid fraction, separate the liquid part of that fraction to obtain a liquid fraction;
b) subject the liquid fraction to anaerobic or aerobic fermentation;
c) monitor the pH until it is greater than 7 and until the chemical oxygen demand (COD) is between 500 mg O₂/l and 1000 mg O₂/l.

2. Procedure according to claim 1 **characterized by** the fact that the liquid fraction of the organic waste in a recycling unit comes from a municipal solid waste recycling unit.

3. Procedure according to any of claims 1 to 2, **characterized in that** separation step a) is carried out by means of centrifugation and/or decantation.

4. Procedure according to any one of claims 1 to 3, **characterized by** the fact that before step b) the liquid fraction coming from a landfill or a recycling unit is mixed with a liquid providing nutrients selected from: sludge, faecal non-waste effluent, liquid effluent from the agri-food industry and/or liquid effluent from forestry.

5. Procedure according to any of claims 1 to 4, **characterized in that** in the case of step b), when the fermentation is anaerobic, methane is recovered as a by-product.

6. Procedure according to any one of claims 1 to 5, **characterized in that** it comprises a step d) for analysing heavy metals selected from: Cd, Cr (VI), Hg, Ni, Pb and As, after step b), wherein steps c) and d) can be carried out in any order.

7. Process according to any one of claims 1 to 6, **characterized by** the fact that it comprises a step e) of adding N and/or P and/or K.

8. Process according to any one of claims 1 to 7, **characterized in that** step b) is carried out at a temperature between 32 °C and 37 °C.

9. Liquid fertilizer obtained by the process according to any of claims 1 to 8 which has a pH greater than 7 and a (COD) between 500 mg O₂/and 1000 mg O₂/l.

10. Liquid fertilizer **characterized by** a pH between 7 and 9.

11. Use of the liquid fertilizer according to claim 9 for the development of crops or enrichment of the soil of a plantation.

12. Use of a liquid fraction of organic waste from a landfill or recycling plant to obtain a liquid fertilizer.

## Amended claims

### Amended claims in accordance with Rule 137(2) EPC.

1. Process for the recovery of organic waste from a landfill to obtain a liquid fertiliser, comprising the steps of:
a) optionally separating any solids present in the liquid fraction or, if starting from a solid fraction, separating the liquid part from said fraction to obtain a liquid fraction;
b) subjecting the liquid fraction to anaerobic or aerobic fermentation;
c) monitoring the pH until it is greater than 7 and until the chemical oxygen demand (COD) is between 500 mg O₂/l and 1000 mg O₂/l.

2. Process according to claim 1, **characterised in that** the liquid fraction of organic waste originates from a municipal solid waste recycling unit.

3. Process according to any one of claims 1 to 2, **characterised in that** step a) separation is performed via centrifugation and/or decantation.

4. Process according to any one of claims 1 to 3, **characterised in that**, prior to step b), the leachate from the landfill is mixed with a liquid providing nutrients selected from: slurry, non-faecal effluents, agro-industrial liquid effluents, and/or forestry liquid effluents.

5. Process according to any one of claims 1 to 4, **characterised in that**, in step b), when fermentation is anaerobic, methane is recovered as a by-product.

6. Process according to any one of claims 1 to 5, **characterised by** including a step d) of analysing heavy metals selected from: Cd, Cr (VI), Hg, Ni, Pb, and As, after step b), wherein steps c) and d) may be performed in any order.

7. Process according to claims 6, **characterised by** comprising a step e) of adding N and/or P and/or K.

8. Process according to any one of claims 1 to 7, **characterised in that** step b) is performed at a temperature between 32° C and 37° C.

9. Liquid fertiliser obtained through the process according to any one of claims 1 to 8, having a pH above 7 and a COD between 500 mg O₂/l and 1000 mg O₂/l.

10. Liquid fertiliser according to claim 9, **characterised by** a pH between 7 and 9.

11. Use of the liquid fertiliser according to claims 9 to 10 for crop development or soil enrichment for plantations.
